# FASCICULE DE BREVET EUROPEEN

(11) **EP 2 684 509 B1**
(45) Date de publication et mention de la délivrance du brevet: **28.10.2015**
(21) Numéro de dépôt: 13176220.5
(22) Date de dépôt: 11.07.2013
(51) Int. Cl.: A47L 15/42, D06F 39/00

(54) **Machine à laver comprenant un réservoir d'eau de lavage et/ou de rinçage**
Waschmaschine mit Wasch- und/oder Spülwasserbehälter
Washing machine including a tank of washing and/or rinsing water

(30) Priorité: 12.07.2012 FR 1201981
(43) Date de publication de la demande: 15.01.2014
(73) Titulaire: Groupe Brandt, 92500 Rueil-Malmaison (FR)
(72) Inventeur: Bonnet, Philippe, 85140 L'OIE (FR); Remeur, Daniel, 85170 DOMPIERRE SUR YON (FR); Bretaud, Jacques, 85000 Mouilleron le Captif (FR)

(56) Documents cités:
- EP-A2- 0 736 626
- WO-A1-2011/080113
- DE-A1-102008 040 653
- FR-A1- 2 953 118

## Description

La présente invention concerne une machine à laver comprenant un réservoir d'eau de lavage et/ou de rinçage, et en particulier une machine à laver la vaisselle ou une machine à laver le linge.

De manière générale, la présente invention concerne les machines à laver comprenant un réservoir d'eau de lavage et/ou de rinçage permettant l'utilisation de cette eau de lavage et/ou de rinçage au cours d'une phase suivante d'un cycle de fonctionnement ou lors d'un cycle de fonctionnement suivant.

Plus particulièrement, la présente invention trouve son application dans les machines à laver domestiques, et en particulier dans les machines à laver la vaisselle et les machines à laver le linge.

On connaît déjà les documents FR 2 953 118 A1 et DE 20 2008 040653 A1, divulguant des machines à laver comprenant un réservoir d'eau de lavage et/ou de rincage ainsi qu'un circuit hydraulique de distribution d'eau ayant une première branche et une deuxième branche. On connait également le document EP 0 669 097 A2 qui décrit une machine à laver comprenant une cuve de lavage, un réservoir d'eau de lavage et/ou de rinçage, un circuit hydraulique de distribution d'eau. Le circuit hydraulique de distribution d'eau comprend une première branche et une deuxième branche.

La première branche comprend une pompe de circulation d'eau de sorte à alimenter en eau au moins un moyen d'aspersion d'eau disposé dans la cuve de lavage.

La deuxième branche comprend une pompe de récupération d'eau de sorte à alimenter en eau au moins une zone de stockage d'eau du réservoir d'eau lors de la récupération d'eau provenant d'au moins une phase de lavage et/ou de rinçage.

La deuxième branche comprend également une vanne de sorte à empêcher un écoulement d'eau depuis le réservoir d'eau vers la cuve de lavage au travers d'une ouverture de passage d'eau ménagée dans le réservoir d'eau suite à l'alimentation en eau du réservoir d'eau, et de sorte à permettre un écoulement d'eau depuis le réservoir d'eau vers la cuve de lavage au travers de l'ouverture de passage d'eau ménagée dans le réservoir d'eau lors de la vidange du réservoir d'eau vers la cuve de lavage.

Cependant, cette machine à laver ayant un réservoir d'eau de lavage et/ou de rinçage présente l'inconvénient que le flux d'eau de lavage et/ou de rinçage entrant dans le réservoir d'eau au travers d'une ouverture de passage d'eau disposée en partie supérieure de ce dernier provoque une projection d'eau à l'intérieur du réservoir d'eau depuis la partie supérieure du réservoir d'eau au cours de la phase de remplissage en eau du réservoir d'eau.

Par conséquent, cette projection d'eau tombe sur la surface supérieure de la quantité d'eau présente à l'intérieur du réservoir d'eau et génère ainsi du bruit lors de l'impact de la projection d'eau avec la surface supérieure de la quantité d'eau présente à l'intérieur du réservoir d'eau.

En outre, ce bruit généré lors de l'impact de la projection d'eau avec la surface supérieure de la quantité d'eau présente à l'intérieur du réservoir d'eau est amplifié puisque le réservoir d'eau est fermé.

Ce bruit généré lors de l'impact de la projection d'eau avec la surface supérieure de la quantité d'eau présente à l'intérieur du réservoir d'eau est nuisible à la perception de la qualité de la machine à laver.

Par ailleurs, la conduite d'alimentation en eau du réservoir d'eau ménagée après la pompe de récupération d'eau et la conduite de vidange en eau du réservoir d'eau ménagée après la vanne permettent un écoulement d'eau orienté uniquement dans une seule direction.

Par conséquent, ces conduites d'alimentation en eau du réservoir d'eau et de vidange en eau du réservoir d'eau peuvent être obstruées au moins partiellement par un objet solide, par exemple un déchet entraîné par l'écoulement d'eau.

La présente invention a pour but de résoudre les inconvénients précités et de proposer une machine à laver comprenant un réservoir d'eau de lavage et/ou de rinçage permettant de limiter les bruits d'écoulement d'eau lors du remplissage en eau du réservoir d'eau, et de simplifier le circuit hydraulique de distribution d'eau tout en séparant les différentes branches de ce circuit hydraulique de sorte à minimiser les modifications d'une machine à laver dépourvue d'un réservoir d'eau.

A cet égard, la présente invention vise une machine à laver comprenant:
- une cuve de lavage ;
- un réservoir d'eau de lavage et/ou de rinçage;
- un circuit hydraulique de distribution d'eau, où ledit circuit hydraulique de distribution d'eau comprend :
   o une première branche, ladite première branche comprenant une pompe de circulation d'eau de sorte à alimenter en eau au moins un moyen d'aspersion d'eau disposé dans ladite cuve de lavage ;
   o une deuxième branche, ladite deuxième branche comprenant:
      ▪ une pompe de récupération d'eau de sorte à alimenter en eau au moins une zone de stockage d'eau dudit réservoir d'eau lors de la récupération d'eau provenant d'au moins une phase de lavage et/ou de rinçage,
      ▪ une vanne de sorte à empêcher un écoulement d'eau depuis ledit réservoir d'eau vers ladite cuve de lavage au travers d'une ouverture de passage d'eau ménagée dans ledit réservoir d'eau suite à l'alimentation en eau dudit réservoir d'eau, et de sorte à permettre un écoulement d'eau depuis ledit réservoir d'eau vers ladite cuve de lavage au travers de ladite ouverture de passage d'eau ménagée dans ledit réservoir d'eau lors de la vidange dudit réservoir d'eau vers ladite cuve de lavage.

Selon l'invention, ladite vanne de ladite deuxième branche dudit circuit hydraulique de distribution d'eau est activée en position ouverte lors de la récupération d'eau provenant d'au moins une phase de lavage et/ou de rinçage de sorte à permettre un écoulement d'eau depuis ladite cuve de lavage vers ledit réservoir d'eau, et ladite deuxième branche dudit circuit hydraulique de distribution d'eau relie ladite cuve de lavage à une paroi inférieure dudit réservoir d'eau, et ledit réservoir d'eau comprend une conduite de trop plein ménagée à l'intérieur dudit réservoir d'eau et mise en communication fluidique d'une part avec ladite au moins une zone de stockage d'eau dudit réservoir d'eau et d'autre part avec un puisard de ladite cuve de lavage.

Ainsi, un flux d'eau de lavage et/ou de rinçage entrant en partie inférieure du réservoir d'eau lors de l'alimentation en eau du réservoir d'eau depuis la cuve de lavage permet de limiter les bruits d'écoulement d'eau lors du remplissage en eau du réservoir d'eau.

En outre, le circuit hydraulique de distribution d'eau de la machine à laver est simplifié tout en séparant les première et deuxième branches de ce circuit hydraulique de distribution d'eau.

La vanne disposée dans la deuxième branche du circuit hydraulique permet d'empêcher un écoulement d'eau depuis le réservoir d'eau vers la cuve de lavage au travers d'une ouverture de passage d'eau ménagée en partie inférieure du réservoir d'eau suite à l'alimentation en eau du réservoir d'eau, de mettre en circulation un écoulement d'eau depuis le réservoir d'eau vers la cuve de lavage au travers de l'ouverture de passage d'eau ménagée en partie inférieure du réservoir d'eau lors de la vidange du réservoir d'eau vers la cuve de lavage, et de mettre en circulation un écoulement d'eau depuis la cuve de lavage vers le réservoir d'eau au travers de l'ouverture de passage d'eau ménagée en partie inférieure du réservoir d'eau lors de la récupération d'eau provenant d'au moins une phase de lavage et/ou de rinçage.

Par ailleurs, la deuxième branche du circuit hydraulique permet de mettre en circulation l'eau de lavage et/ou de rinçage depuis la cuve de lavage vers le réservoir d'eau lors du remplissage en eau du réservoir d'eau au moyen de la pompe de récupération d'eau et en activant la vanne en position ouverte, et de mettre en circulation l'eau de lavage et/ou de rinçage depuis le réservoir d'eau vers la cuve de lavage lors de la vidange en eau du réservoir d'eau par gravité en activant la vanne en position ouverte et en maintenant à l'arrêt la pompe de récupération d'eau.

De cette manière, la deuxième branche du circuit hydraulique s'étend depuis la cuve de lavage jusqu'à la paroi inférieure du réservoir d'eau de sorte à minimiser la longueur des conduites de circulation d'eau reliant la cuve de lavage, la pompe de récupération d'eau, la vanne et le réservoir d'eau, et de sorte à réduire le coût d'obtention de la machine à laver.

La deuxième branche du circuit hydraulique de distribution d'eau de la machine à laver permet un écoulement d'eau dans une direction depuis le puisard de la cuve de lavage vers le réservoir d'eau au travers de la vanne et de la pompe de récupération d'eau, et dans une autre direction depuis le réservoir d'eau vers le puisard de la cuve de lavage au travers de la vanne et de la pompe de récupération d'eau.

De cette manière, dans le cas où une zone de la deuxième branche du circuit hydraulique est obstruée par un objet solide, par exemple un déchet entraîné par l'écoulement d'eau, lors d'un écoulement d'eau dans une première direction, un écoulement d'eau dans une deuxième direction au travers de la deuxième branche du circuit hydraulique peut permettre d'entraîner l'objet solide bloqué dans la zone de la deuxième branche du circuit hydraulique.

Une telle machine à laver ayant un réservoir d'eau de lavage et/ou de rinçage où le circuit hydraulique de distribution d'eau de la machine à laver comprend une conduite de trop plein ménagée à l'intérieur du réservoir d'eau et mise en communication fluidique avec le puisard de la cuve de lavage permet de s'affranchir d'un capteur de niveau d'eau monté sur le réservoir d'eau détectant le niveau haut d'eau à l'intérieur du réservoir d'eau.

De cette manière, le remplissage en eau de lavage et/ou de rinçage du réservoir d'eau depuis la cuve de lavage de la machine à laver s'effectue en activant la pompe de récupération d'eau sans contrôler le niveau d'eau à l'intérieur du réservoir d'eau.

Dans le cas où la quantité d'eau de lavage et/ou de rinçage présente dans la cuve de lavage de la machine à laver est supérieure à la contenance du réservoir d'eau, le surplus d'eau est retourné dans le puisard de la cuve de lavage au moyen de la conduite de trop plein ménagée à l'intérieur du réservoir d'eau.

En outre, une telle machine à laver ayant un réservoir d'eau de lavage et/ou de rinçage est moins onéreuse et plus simple à assembler tout en évitant d'arroser les pièces de vaisselle contenues à l'intérieur de la cuve de lavage par l'eau introduite en excès dans le réservoir d'eau et retournée depuis le réservoir d'eau vers la cuve de lavage.

Selon une caractéristique préférée de l'invention, ladite deuxième branche dudit circuit hydraulique de distribution d'eau comprend une pluralité de conduites de circulation d'eau reliant ledit puisard de ladite cuve de lavage audit réservoir d'eau, et ladite conduite de trop plein dudit réservoir d'eau est reliée audit puisard de ladite cuve de lavage par une autre conduite de circulation d'eau de sorte à déverser un excès d'eau introduit dans ledit réservoir d'eau vers ledit puisard de ladite cuve de lavage, ladite autre conduite de circulation d'eau reliant ladite conduite de trop plein dudit réservoir d'eau audit puisard de ladite cuve de lavage est séparée de la pluralité de conduites de circulation d'eau de ladite deuxième branche dudit circuit hydraulique de distribution d'eau.

Ainsi, lors de l'alimentation en eau du réservoir d'eau depuis la cuve de lavage, un flux d'eau de lavage et/ou de rinçage entre en partie inférieure du réservoir d'eau jusqu'au niveau d'une ouverture de passage d'eau de la conduite de trop plein. Puis, l'eau introduite en excès dans le réservoir d'eau est retournée depuis le réservoir d'eau vers la cuve de lavage au moyen de la conduite de circulation d'eau reliant la conduite de trop plein du réservoir d'eau au puisard de la cuve de lavage étant séparée de la pluralité de conduites de circulation d'eau de la deuxième branche du circuit hydraulique de distribution d'eau.

D'autres particularités et avantages de l'invention apparaîtront encore dans la description ci-après.

Aux dessins annexés, donnés à titre d'exemples non limitatifs:
- la figure 1 est une première vue schématique partielle en perspective illustrant une machine à laver la vaisselle comprenant un réservoir d'eau de lavage et/ou de rinçage selon un mode de réalisation de l'invention ;
- la figure 2 est une deuxième vue schématique partielle en perspective illustrant une machine à laver la vaisselle comprenant un réservoir d'eau de lavage et/ou de rinçage selon un mode de réalisation de l'invention, où la cuve de lavage est partiellement ôtée ;
- la figure 3 est une vue schématique de côté illustrant une machine à laver la vaisselle comprenant un réservoir d'eau de lavage et/ou de rinçage selon un mode de réalisation de l'invention ;
- la figure 4 est une vue en section de la figure 3 selon le plan de coupe AA;
- la figure 5 est une vue éclatée illustrant un réservoir d'eau de lavage et/ou de rinçage comprenant deux parois en forme en coque selon un mode de réalisation de l'invention ;
- la figure 6 est une vue de face illustrant l'une des deux parois en forme de coque selon un premier mode de réalisation ;
- la figure 7 est une vue de face illustrant l'une des deux parois en forme de coque selon un deuxième mode de réalisation ;
- la figure 8 est une vue schématique illustrant une partie d'un circuit hydraulique de distribution d'eau d'une machine à laver la vaisselle comprenant un réservoir d'eau de lavage et/ou de rinçage selon un mode de réalisation de l'invention ;
- la figure 9 est une vue schématique illustrant une partie d'un circuit hydraulique de distribution d'eau d'une machine à laver la vaisselle comprenant un réservoir d'eau de lavage et/ou de rinçage selon un mode de réalisation de l'invention ; et
- la figure 10 est une autre vue schématique illustrant une partie d'un circuit hydraulique de distribution d'eau d'une machine à laver la vaisselle comprenant un réservoir d'eau de lavage et/ou de rinçage selon un mode de réalisation de l'invention.

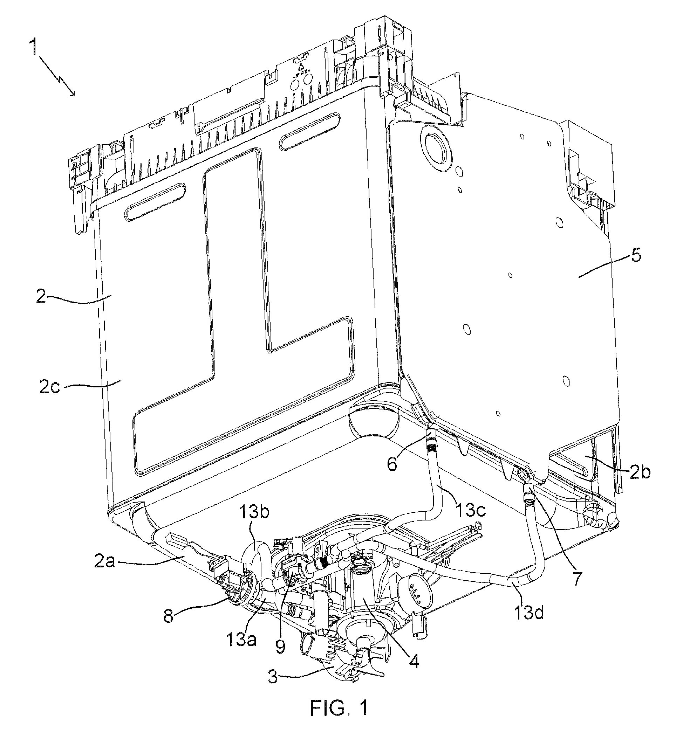

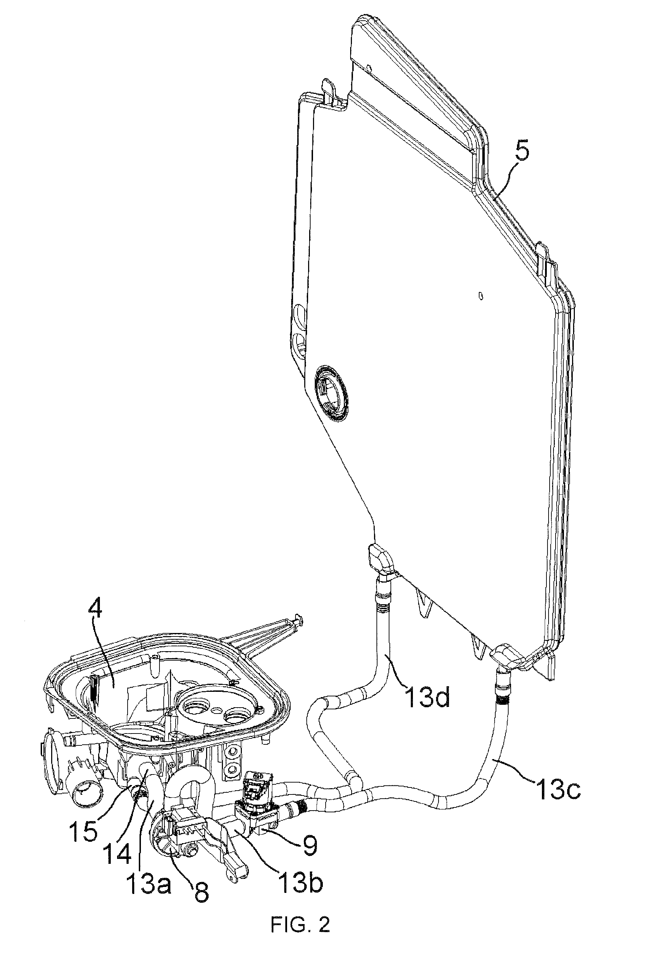

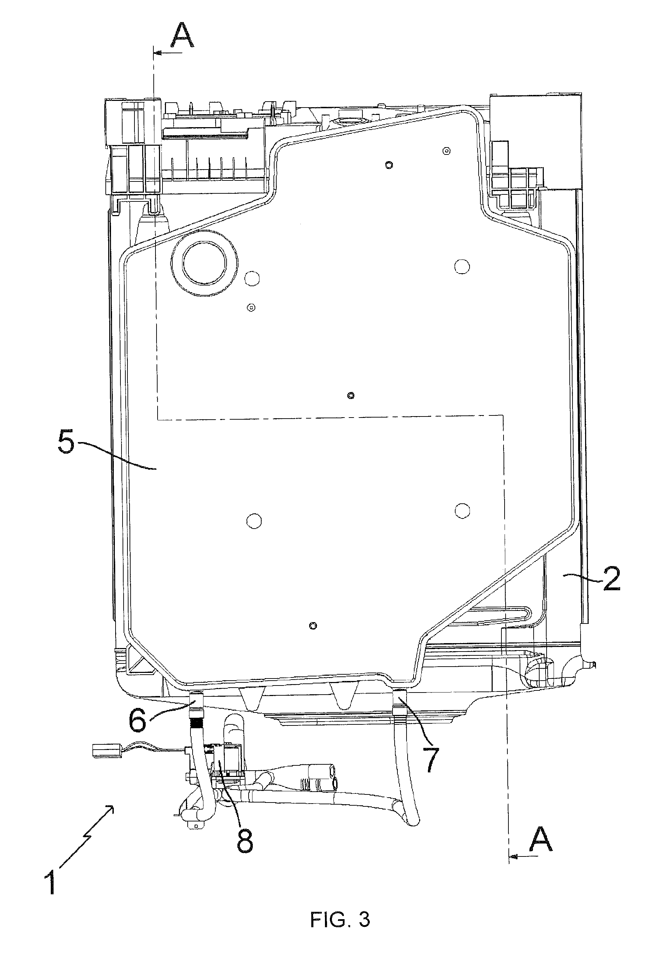

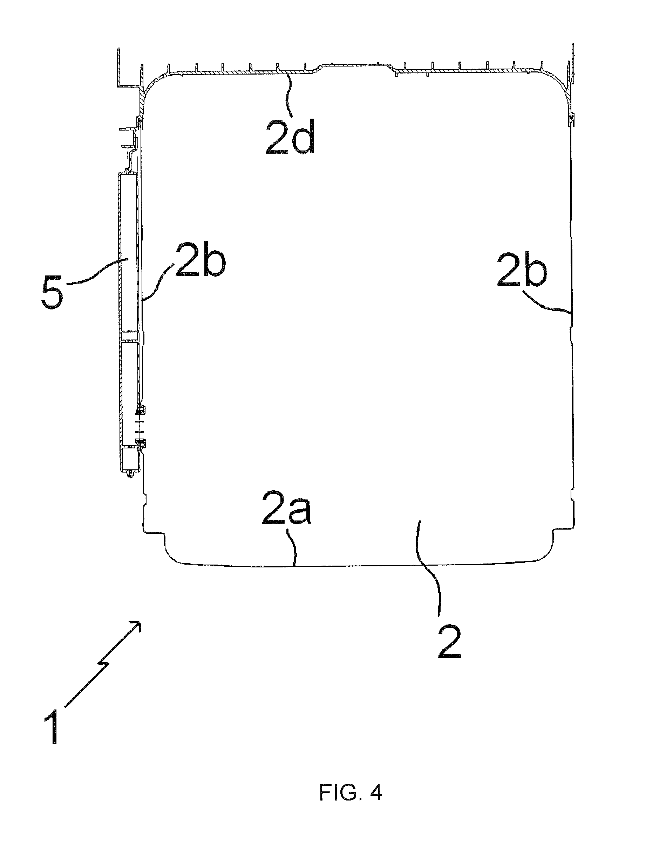

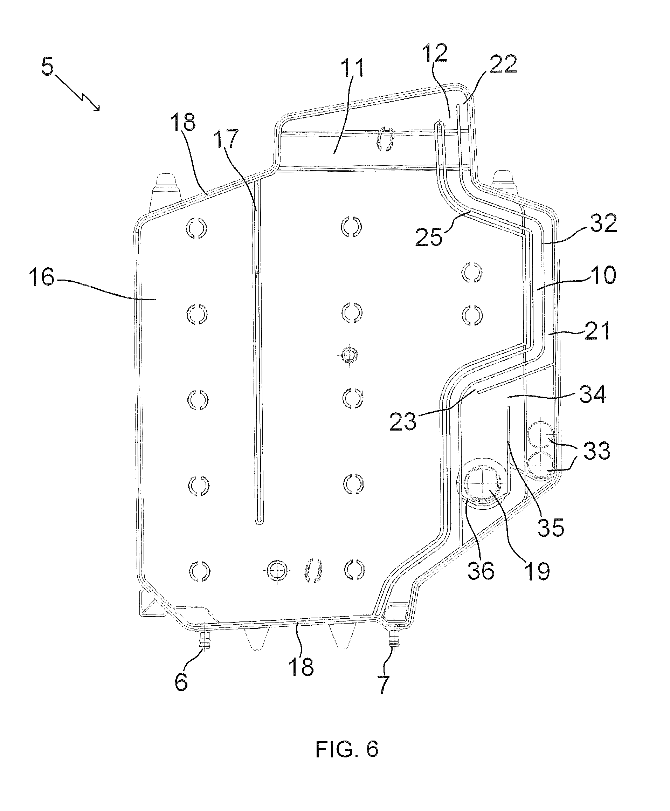

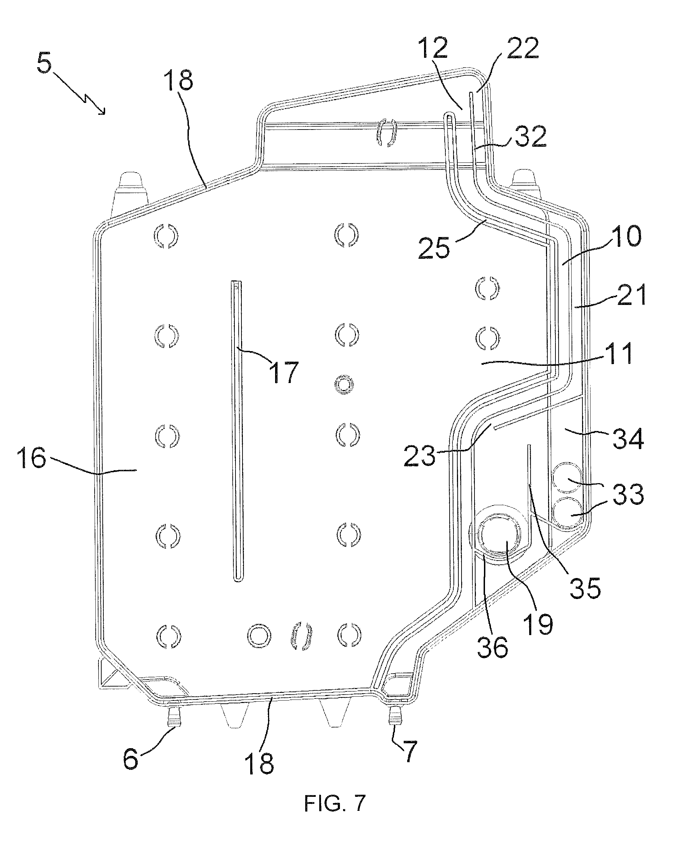

On va décrire tout d'abord, en référence aux figures 1 à 10, une machine à laver conforme à un mode de réalisation de l'invention.

Cette machine à laver peut être une machine à laver la vaisselle à usage domestique, ou une machine à laver le linge à usage domestique, ou une machine à laver et à sécher le linge à usage domestique.

On a illustré un mode de réalisation, en référence à la figure 1, décrivant une machine à laver la vaisselle à chargement frontal de la vaisselle. Bien entendu, la présente invention s'applique à tous les types de machine à laver, et notamment à chargement par le dessus.

Une machine à laver la vaisselle 1 comprend une cuve de lavage 2 dont la face frontale est fermée par une porte (non représentée).

Dans un mode de réalisation, la cuve de lavage 2 peut comprendre une carrosserie formée par au moins des parois latérales. La carrosserie de la machine à laver et à sécher la vaisselle 1 peut également comprendre une paroi supérieure pour les machines à laver et à sécher la vaisselle en pose libre.

La porte de la cuve de lavage 2 permet d'obturer une ouverture réalisée dans la cuve de lavage 2. Cette porte de la cuve de lavage 2 peut ainsi être mobile entre une position fermée dans laquelle elle obture l'ouverture, de manière étanche, et une position ouverte.

Dans un exemple de réalisation, et de manière nullement limitative, la porte de la cuve de lavage 2 est montée pivotante autour d'un axe de rotation solidaire de la carrosserie de la machine à laver la vaisselle 1.

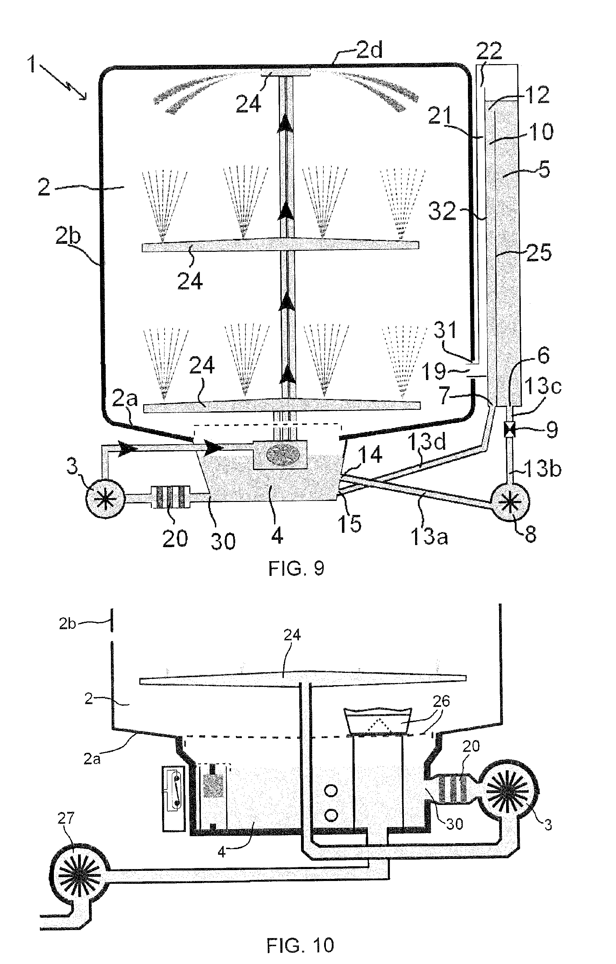

La cuve de lavage 2 comprend au moins un moyen d'aspersion d'eau 24 d'un bain de lavage et/ou de rinçage sur les pièces de vaisselle, tel qu'illustré à la figure 9.

Ici et de manière nullement limitative, la cuve de lavage 2 comprend un moulinet d'aspersion d'eau supérieur, un moulinet d'aspersion inférieur et une buse d'arrosage disposée au plafond de la cuve de lavage 2.

Une eau d'un bain de lavage et/ou de rinçage est définie comme de l'eau permettant le nettoyage de la vaisselle et circulant dans un circuit hydraulique de distribution d'eau d'une machine à laver la vaisselle 1. L'origine de l'eau d'un bain de lavage et/ou de rinçage est une eau arrivant du réseau d'alimentation de la machine à laver la vaisselle 1.

La cuve de lavage 2 comprend une paroi inférieure 2a, des parois latérales 2b, une paroi de fond 2c et une paroi supérieure 2d.

La carrosserie de la machine à laver la vaisselle 1 est adaptée à loger la cuve de lavage 2. Ladite cuve de lavage 2 est adaptée à contenir notamment l'eau des bains de lavage et/ou de rinçage des différentes phases d'un cycle de nettoyage.

Au moins un panier à vaisselle (non représenté) est monté à l'intérieur de la cuve de lavage 2.

En particulier, un panier à vaisselle peut être situé dans la partie supérieure de la cuve de lavage 2 et désigné par panier supérieur, et un panier à vaisselle peut être situé dans la partie inférieure de la cuve de lavage 2 et désigné par panier inférieur.

Les paniers à vaisselle peuvent être poussés et retirés en les faisant glisser à l'intérieur de la cuve de lavage 2 de la machine à laver la vaisselle 1 soit après la fin d'un cycle de nettoyage pour le déchargement de la vaisselle soit avant le début d'un cycle de nettoyage pour le chargement de la vaisselle.

Cette machine à laver la vaisselle 1 est munie d'une pompe pour la circulation d'eau d'un bain de lavage et/ou de rinçage 3 dans la cuve de lavage 2.

Dans un exemple de réalisation, et de manière nullement limitative, la machine à laver la vaisselle 1 fonctionne de telle sorte à minimiser le bain de lavage et/ou de rinçage retenu dans un puisard 4 ménagé dans la paroi inférieure 2a de la cuve de lavage 2.

La pompe de circulation d'eau 3 puise l'eau du bain de lavage et/ou de rinçage dans le puisard 4 pour mettre en circulation l'eau du bain de lavage et/ou de rinçage sous pression jusqu'aux moyens d'aspersion d'eau 24. Ensuite, le bain de lavage et/ou de rinçage retourne dans le puisard 4.

Cette pompe de circulation d'eau 3 est entraînée par un moteur électrique.

Avantageusement, le puisard 4 ménagé dans la paroi inférieure 2a de la cuve de lavage 2 loge un dispositif de filtration 26 de sorte à filtrer l'eau d'un bain de lavage et/ou de rinçage aspirée par la pompe de circulation d'eau 3 puis mise en circulation jusqu'aux moyens d'aspersion d'eau 24, tel qu'illustré à la figure 10.

La machine à laver la vaisselle 1 peut également comprendre une pompe de vidange 27 de l'eau usée du bain de lavage et/ou de rinçage.

La pompe de vidange 27 puise l'eau usée du bain de lavage et/ou de rinçage dans la cuve de lavage 2, et en particulier dans le puisard 4, pour évacuer l'eau usée du bain de lavage et/ou de rinçage dans un réseau d'eau usée (non représenté) connecté à la machine à laver la vaisselle 1.

Cette pompe de vidange 27 est entraînée par un moteur électrique.

Avantageusement, le dispositif de filtration 26 logé dans le puisard 4 permet de filtrer l'eau d'un bain de lavage et/ou de rinçage aspirée par la pompe de circulation d'eau 3, en particulier lors de l'alimentation en eau des moyens d'aspersion d'eau 24. Et la pompe de vidange 27 permet d'évacuer les salissures prisonnières du dispositif de filtration 26 lors de la mise en circulation de l'eau depuis le puisard 4 jusqu'à un réseau d'eau usée externe.

L'eau d'au moins un bain de lavage et/ou de rinçage contenue dans la cuve de lavage 2, et en particulier dans le puisard 4, peut être chauffée par un moyen de chauffage 20, tel que par exemple une résistance chauffante électrique.

La machine à laver la vaisselle 1 comprend des moyens de commande (non représentés), et notamment au moins un microcontrôleur, permettant de dérouler des cycles de fonctionnement prédéterminés.

Bien entendu, cette machine à laver la vaisselle comporte tous les organes nécessaires (non représentés) au fonctionnement et à l'exécution des cycles de lavage, de rinçage et de séchage de la vaisselle.

La machine à laver 1 comprend un réservoir de stockage d'eau 5 provenant d'au moins une phase de lavage et/ou de rinçage et/ou de séchage pour une réutilisation au cours d'une phase suivante d'un cycle de fonctionnement ou pendant un cycle de fonctionnement suivant mis en oeuvre par ladite machine 1.

Préférentiellement, le réservoir d'eau 5 est interne à la carrosserie de la machine à laver 1.

Le réservoir d'eau 5 peut être fixé sur la cuve de lavage 2 et/ou sur la carrosserie de la machine à laver 1, par exemple le long d'une paroi latérale 2b de la cuve de lavage 2.

Avantageusement, le réservoir d'eau 5 comprend au moins une première et une deuxième ouvertures de passage d'eau 6, 7.

La machine à laver 1 comprend un circuit hydraulique de distribution d'eau, où le circuit hydraulique de distribution d'eau relie la cuve de lavage 2 de la machine à laver au réservoir d'eau 5.

La machine à laver 1 peut comprendre une alimentation en eau du réseau (non représentée) de sorte à remplir la cuve de lavage 2 lors des différentes phases d'un cycle de lavage avec de l'eau n'ayant pas été utilisée lors d'une phase précédente du cycle de fonctionnement en cours ou lors d'un cycle de fonctionnement précédent.

Le circuit hydraulique de distribution d'eau de la machine à laver 1 peut être alimenté en eau du réseau par une conduite d'arrivée d'eau du réseau (non représentée) reliée directement à la machine à laver 1 depuis un réseau d'eau externe au moyen d'une électrovanne permettant de réguler la quantité d'eau nécessaire au fonctionnement de la machine à laver 1.

Le circuit hydraulique de distribution d'eau de la machine à laver 1 relie la cuve de lavage 2 au réservoir d'eau 5.

Le circuit hydraulique de distribution d'eau comprend une pompe de récupération d'eau 8 de sorte à remplir en eau de lavage et/ou de rinçage au moins un compartiment interne 11, 16 de stockage d'eau du réservoir d'eau 5 depuis un puisard 4 de la cuve de lavage 2.

Préférentiellement, le réservoir d'eau 5 est connecté au puisard 4 ménagé dans la paroi inférieure 2a de la cuve de lavage 2 au moyen de la pompe de récupération d'eau 8.

Ainsi, la pompe de récupération d'eau 8 est reliée de manière fluidique d'une part au puisard 4 et d'autre part au réservoir d'eau 5.

De cette manière, la machine à laver 1 pourvue d'un réservoir d'eau 5 permet de récupérer de l'eau d'au moins une phase de lavage et/ou de rinçage, de stocker au moins une partie de cette eau, puis de réutiliser au moins une partie de cette eau au cours d'une phase suivante d'un cycle de fonctionnement ou pendant un cycle de fonctionnement suivant mis en oeuvre par ladite machine à laver 1.

Le réservoir d'eau 5 de la machine à laver 1 permet de stocker tout ou partie de l'eau d'au moins une phase de lavage et/ou de rinçage de sorte à réduire d'autant la consommation d'eau d'un cycle de fonctionnement mis en oeuvre par ladite machine à laver 1.

Selon l'invention, une vanne 9 est disposée entre la pompe de récupération d'eau 8 et le réservoir d'eau 5.

Ainsi, lors du remplissage en eau de lavage et/ou de rinçage du réservoir d'eau 5 depuis la cuve de lavage 2, la pompe de récupération d'eau 8 est mise en fonctionnement et la vanne 9 est activée en position ouverte de sorte à mettre en circulation l'eau depuis le puisard 4 vers le réservoir d'eau 5.

A la fin du remplissage en eau de lavage et/ou de rinçage du réservoir d'eau 5 depuis la cuve de lavage 2, la vanne 9 est activée en position fermée de sorte à retenir l'eau à l'intérieur du réservoir d'eau 5 et à éviter un retour d'eau dans le puisard 4.

Le remplissage en eau du réservoir d'eau 5 est assuré par la mise en fonctionnement de la pompe de récupération d'eau 8, de l'activation en position ouverte de la vanne 9 et réalisé au travers d'une première ouverture de passage d'eau 6 ménagée en partie inférieure du réservoir d'eau 5.

Le remplissage en eau du réservoir d'eau 5 peut être réalisé de manière chronométrique. Ce mode de remplissage en eau chronométrique du réservoir d'eau 5 est contrôlé par une période de temps de mise en fonctionnement de la pompe de récupération d'eau 8 et d'ouverture de la vanne 9 au travers des moyens de commande de la machine à laver 1, tel que par exemple un microcontrôleur.

La période de temps de mise en fonctionnement de la pompe de récupération d'eau 8 est dépendante du débit d'eau de ladite pompe 8 et de la contenance du réservoir d'eau 5.

A la fin du remplissage en eau du réservoir d'eau 5, via les moyens de commande de la machine à laver 1, tel que par exemple un microcontrôleur, la vanne 9 montée dans le circuit hydraulique de distribution d'eau entre la pompe de récupération d'eau 8 et le réservoir d'eau 5 est fermée, puis la pompe de récupération d'eau 8 est arrêtée.

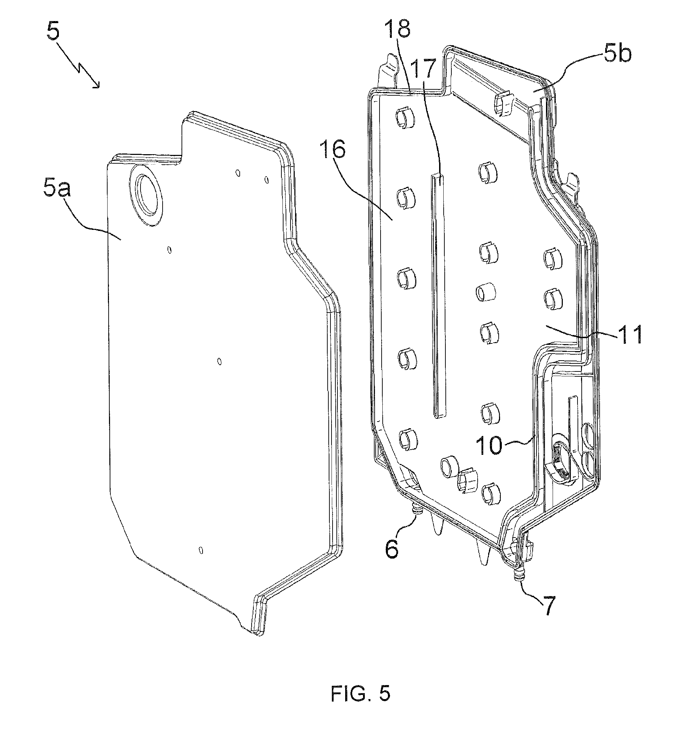

Selon l'invention, le réservoir d'eau 5 comprend au moins une première canalisation interne 10 en communication fluidique avec d'une part au moins un compartiment interne 11 du réservoir d'eau 5 et d'autre part avec le puisard 4 de sorte à réaliser un dispositif de trop plein et de déversement de l'eau en excès du réservoir d'eau 5 dans le puisard 4, tel qu'illustré aux figures 5 à 9.

Dans la suite de la description, ladite au moins une première canalisation interne 10 est également appelée conduite de trop plein.

Le déversement de l'eau en excès du réservoir d'eau 5 dans le puisard 4 est réalisé au travers d'une première canalisation interne 10 du réservoir d'eau 5 s'étendant suivant la hauteur de celui-ci, en particulier ladite première canalisation interne 10 comprenant une ouverture de passage d'eau 12 disposée en partie supérieure dudit réservoir d'eau 5, et une deuxième ouverture de passage d'eau 7 ménagée en partie inférieure du réservoir d'eau 5.

Et, lors de la vidange en eau de lavage et/ou de rinçage du réservoir d'eau 5 vers la cuve de lavage 2, la pompe de récupération d'eau 8 est maintenue à l'arrêt et la vanne 9 est activée en position ouverte de sorte à mettre en circulation l'eau par gravité depuis le réservoir d'eau 5 vers le puisard 4.

Ainsi, la pompe de récupération d'eau 8 étant à l'arrêt est adaptée à laisser passer un flux d'eau au travers de celle-ci lorsque la vanne 9 est en position ouverte de sorte à ne pas bloquer la circulation d'eau par gravité au travers du circuit hydraulique de distribution d'eau de la machine à laver 1 depuis le réservoir d'eau 5 vers le puisard 4.

La vanne 9 située entre la pompe de récupération d'eau 8 et le réservoir d'eau 5 peut être commandée électriquement ou encore par la pression dans le circuit hydraulique de distribution d'eau.

La vidange en eau du réservoir d'eau 5 est réalisée par gravité au travers de la pompe de récupération d'eau 8 maintenue à l'arrêt, de la vanne 9 activée en position ouverte et de la première ouverture de passage d'eau 6 ménagée en partie inférieure du réservoir d'eau 5.

La vidange en eau du réservoir d'eau 5 vers la cuve de lavage 2 est mise en oeuvre par des moyens de commande de la machine à laver 1, tel que par exemple un microcontrôleur, commandant l'ouverture de la vanne 9 et le maintien à l'arrêt de la pompe de récupération d'eau 8 de sorte à permettre un écoulement d'eau par gravité depuis le réservoir d'eau 5 jusque dans la cuve de lavage 2, et en particulier dans le puisard 4, au travers d'une pluralité de conduites de circulation d'eau 13a, 13b, 13c, de la pompe de récupération d'eau 8 et de la vanne 9.

Ainsi, la vidange en eau du réservoir d'eau 5 vers le puisard 4 est gravitaire et ne nécessite aucun entraînement de l'eau par une pompe.

La vidange en eau du réservoir d'eau 5 est mise en oeuvre par l'activation en position ouverte de la vanne 9 pendant une durée prédéterminée de sorte que l'eau du réservoir d'eau 5 s'écoule par gravité dans le puisard 4 lorsque la pompe de récupération d'eau 8 est maintenue à l'arrêt.

La durée prédéterminée d'ouverture de la vanne 9, lors de la vidange en eau du réservoir d'eau 5, est contrôlée par des moyens de commande de la machine à laver 1, tel que par exemple par un microcontrôleur.

La vidange en eau du réservoir d'eau 5 est contrôlée par des moyens de commandes préprogrammés de la machine à laver 1 lors de la récupération d'eau pour une phase suivante d'un cycle de fonctionnement et/ou pour un cycle de fonctionnement suivant de ladite machine 1.

Avantageusement, l'eau de lavage et/ou de rinçage est alimentée dans le réservoir d'eau 5 puis stockée à l'intérieur du réservoir d'eau 5 à la fin d'un cycle de fonctionnement précédent mis en oeuvre par la machine à laver 1, en particulier suite à une étape de rinçage. Puis, l'eau de lavage et/ou de rinçage stockée dans le réservoir d'eau 5 est vidangée dans le puisard 4 au départ d'un cycle de fonctionnement suivant mis en oeuvre par la machine à laver 1, en particulier lors d'une étape de lavage ou de prélavage.

Dans un mode de réalisation préféré, une quantité d'eau supplémentaire provenant d'un réseau d'eau externe est alimentée dans le puisard 4 suite à la vidange en eau du réservoir d'eau 5 dans le puisard 4. Ce remplissage en eau supplémentaire est mis en oeuvre au moyen de la vanne (non représentée) connectant la machine à laver 1 à un réseau d'eau externe.

La vidange en eau du réservoir d'eau 5 peut être également commandée par un utilisateur ou par des moyens de commande de la machine à laver 1 de sorte à évacuer l'eau du réservoir d'eau 5 vers un réseau d'eau usée, notamment avant ou après une période prolongée de non utilisation de ladite machine 1.

Lors de l'évacuation de l'eau du réservoir d'eau 5 vers un réseau d'eau usée:
- une première phase de vidange en eau du réservoir d'eau 5 est mise en oeuvre par l'ouverture de la vanne 9 pendant une durée prédéterminée de sorte que l'eau dudit réservoir d'eau 5 s'écoule par gravité dans le puisard 4 tout en maintenant à l'arrêt la pompe de récupération d'eau 8 ; puis
- une deuxième phase d'évacuation en eau depuis le puisard 4 vers un réseau d'eau usée par la mise en fonctionnement de la pompe de vidange 27.

La première ouverture de passage d'eau 6 ménagée en partie inférieure du réservoir d'eau 5 sert d'une part à remplir en eau ledit réservoir d'eau 5 et d'autre part à vidanger ledit réservoir d'eau 5.

Préférentiellement, la première ouverture de passage d'eau 6 du réservoir d'eau 5 est reliée de manière fluidique à la vanne 9 et située au-dessus du niveau d'eau maximum dans la cuve de lavage 2 lorsque l'eau du bain de lavage et/ou de rinçage à l'intérieur de la cuve de lavage 2 est statique.

Avantageusement, la pompe de récupération d'eau 8 est une pompe centrifuge.

La spécificité des pompes centrifuges consiste en ce qu'elles permettent le passage d'un flux d'eau à l'intérieur de leur corps lorsqu'elles ne sont pas mises en fonctionnement.

Ici, la pompe de récupération d'eau 8 est située en dessous du réservoir d'eau 5.

Ainsi, la pompe de récupération d'eau 8 permet de remplir en eau de lavage et/ou de rinçage le réservoir d'eau 5 depuis la cuve de lavage 2.

Le positionnement de la pompe de récupération d'eau 8 étant une pompe centrifuge est également lié à sa conception puisque cette pompe de récupération d'eau 8 ne peut fonctionner qu'en étant gavée d'eau.

Par ailleurs, le positionnement de la pompe de récupération d'eau 8 en dessous du réservoir d'eau 5 est également lié à l'espace disponible à l'intérieur de la carrosserie de la machine à laver 1 de sorte à optimiser les dimensions de la cuve de lavage 2 de la machine à laver 1 et du réservoir d'eau 5.

Pratiquement, le puisard 4 est relié à la pompe de récupération d'eau 8 par une première conduite de circulation d'eau 13a. La pompe de récupération d'eau 8 est reliée à la vanne 9 par une deuxième conduite de circulation d'eau 13b. Et la vanne 9 est reliée au réservoir d'eau 5 par une troisième conduite de circulation d'eau 13c.

Ici, le puisard 4 comprend une première ouverture de passage d'eau 14 connectée à la première conduite de circulation d'eau 13a de sorte à mettre en circulation l'eau depuis la cuve de lavage 2 vers le réservoir d'eau 5, et inversement. Le puisard 4 comprend également une deuxième ouverture d'entrée d'eau 15 connectée à une quatrième conduite de circulation d'eau 13d de sorte à déverser l'excès d'eau introduit dans le réservoir d'eau 5 vers le puisard 4. La quatrième conduite de circulation d'eau 13d est également connectée à la deuxième ouverture de passage d'eau 7 ménagée en partie inférieure du réservoir d'eau 5.

Le puisard 4 ménagé en partie inférieure de la cuve de lavage 2 comprend également une ouverture de passage d'eau 30 vers la pompe de circulation d'eau 3 et une ouverture de passage d'eau vers la pompe de vidange 27.

La pompe de circulation d'eau 3 est reliée en entrée à une cinquième conduite de circulation d'eau avec le puisard 4, et en sortie à au moins une conduite de circulation d'eau avec un ou plusieurs moyens d'aspersion d'eau 24 disposés dans la cuve de lavage 2.

La pompe de vidange 27 est reliée en entrée à une sixième conduite de circulation d'eau avec le puisard 4, et en sortie à une conduite de circulation d'eau avec un réseau d'eau usée.

Le circuit hydraulique de distribution d'eau de la machine à laver 1 comprend une première branche. La première branche comprend une pompe de circulation d'eau 3 de sorte à alimenter en eau au moins un moyen d'aspersion d'eau 24 disposé dans la cuve de lavage 2.

Le circuit hydraulique de distribution d'eau de la machine à laver 1 comprend également une deuxième branche. La deuxième branche comprend la pompe de récupération d'eau 8 de sorte à alimenter en eau au moins une zone de stockage d'eau du réservoir d'eau 5 lors de la récupération d'eau provenant d'au moins une phase de lavage et/ou de rinçage. La deuxième branche comprend également une vanne 9 de sorte à empêcher un écoulement d'eau depuis le réservoir d'eau 5 vers la cuve de lavage 2 au travers d'une ouverture de passage d'eau 6 ménagée dans le réservoir d'eau 5 suite à l'alimentation en eau du réservoir d'eau 5, et de sorte à permettre un écoulement d'eau depuis le réservoir d'eau 5 vers la cuve de lavage 2 au travers de l'ouverture de passage d'eau 6 ménagée dans le réservoir d'eau 5 lors de la vidange du réservoir d'eau 5 vers la cuve de lavage 2.

La vanne 9 de la deuxième branche du circuit hydraulique de distribution d'eau est activée en position ouverte lors de la récupération d'eau provenant d'au moins une phase de lavage et/ou de rinçage de sorte à permettre un écoulement d'eau depuis la cuve de lavage 2 vers le réservoir d'eau 5.

Et la deuxième branche du circuit hydraulique de distribution d'eau relie la cuve de lavage 2 à une paroi inférieure du réservoir d'eau 5.

Ainsi, un flux d'eau de lavage et/ou de rinçage entrant en partie inférieure du réservoir d'eau 5 lors de l'alimentation en eau du réservoir d'eau 5 depuis la cuve de lavage 2 permet de limiter les bruits d'écoulement d'eau lors du remplissage en eau du réservoir d'eau 5.

En outre, le circuit hydraulique de distribution d'eau de la machine à laver 1 est simplifié tout en séparant les première et deuxième branches de ce circuit hydraulique de distribution d'eau.

La vanne 9 disposée dans la deuxième branche du circuit hydraulique permet d'empêcher un écoulement d'eau depuis le réservoir d'eau 5 vers la cuve de lavage 2 au travers d'une ouverture de passage d'eau 6 ménagée en partie inférieure du réservoir d'eau 5 suite à l'alimentation en eau du réservoir d'eau 5, de mettre en circulation un écoulement d'eau depuis le réservoir d'eau 5 vers la cuve de lavage 2 au travers de l'ouverture de passage d'eau 6 ménagée en partie inférieure du réservoir d'eau 5 lors de la vidange du réservoir d'eau 5 vers la cuve de lavage 2, et de mettre en circulation un écoulement d'eau depuis la cuve de lavage 2 vers le réservoir d'eau 5 au travers de l'ouverture de passage d'eau 6 ménagée en partie inférieure du réservoir d'eau 5 lors de la récupération d'eau provenant d'au moins une phase de lavage et/ou de rinçage.

Par ailleurs, la deuxième branche du circuit hydraulique permet de mettre en circulation l'eau de lavage et/ou de rinçage depuis la cuve de lavage 2 vers le réservoir d'eau 5 lors du remplissage en eau du réservoir d'eau 5 au moyen de la pompe de récupération d'eau 8 et en activant la vanne 9 en position ouverte, et de mettre en circulation l'eau de lavage et/ou de rinçage depuis le réservoir d'eau 5 vers la cuve de lavage 2 lors de la vidange en eau du réservoir d'eau 5 par gravité en activant la vanne 9 en position ouverte et en maintenant à l'arrêt la pompe de récupération d'eau 8.

De cette manière, la deuxième branche du circuit hydraulique s'étend depuis la cuve de lavage 2 jusqu'à la paroi inférieure du réservoir d'eau 5 de sorte à minimiser la longueur des conduites de circulation d'eau 13a, 13b, 13c reliant la cuve de lavage 2, la pompe de récupération d'eau 8, la vanne 9 et le réservoir d'eau 5, et de sorte à réduire le coût d'obtention de la machine à laver 1.

La deuxième branche du circuit hydraulique de distribution d'eau de la machine à laver 1 permet un écoulement d'eau dans une direction depuis le puisard 4 de la cuve de lavage 2 vers le réservoir d'eau 5 au travers de la vanne 9 et de la pompe de récupération d'eau 8, et dans une autre direction depuis le réservoir d'eau 5 vers le puisard 4 de la cuve de lavage 2 au travers de la vanne 9 et de la pompe de récupération d'eau 8.

De cette manière, dans le cas où une zone de la deuxième branche du circuit hydraulique est obstruée par un objet solide, par exemple un déchet entraîné par l'écoulement d'eau, lors d'un écoulement d'eau dans une première direction, un écoulement d'eau dans une deuxième direction au travers de la deuxième branche du circuit hydraulique peut permettre d'entraîner l'objet solide bloqué dans la zone de la deuxième branche du circuit hydraulique.

Avantageusement, le réservoir d'eau 5 comprend une conduite de trop plein 10 ménagée à l'intérieur du réservoir d'eau 5 et mise en communication fluidique d'une part avec ladite au moins une zone de stockage d'eau du réservoir d'eau 5 et d'autre part avec le puisard 4 de la cuve de lavage 2.

Ainsi, une telle machine à laver 1 ayant un réservoir d'eau de lavage et/ou de rinçage 5 où le circuit hydraulique de distribution d'eau de la machine à laver 1 comprend une conduite de trop plein 10 ménagée à l'intérieur du réservoir d'eau 5 et mise en communication fluidique avec le puisard 4 de la cuve de lavage 2 permet de s'affranchir d'un capteur de niveau d'eau monté sur le réservoir d'eau 5 détectant le niveau haut d'eau à l'intérieur du réservoir d'eau 5.

De cette manière, le remplissage en eau de lavage et/ou de rinçage du réservoir d'eau 5 depuis la cuve de lavage 2 de la machine à laver 1 s'effectue en activant la pompe de récupération d'eau 8 sans contrôler le niveau d'eau à l'intérieur du réservoir d'eau 5.

Dans le cas où la quantité d'eau de lavage et/ou de rinçage présente dans la cuve de lavage 2 de la machine à laver 1 est supérieure à la contenance du réservoir d'eau 5, le surplus d'eau est retourné dans le puisard 4 de la cuve de lavage 2 au moyen de la conduite de trop plein 10 ménagée à l'intérieur du réservoir d'eau 5.

En outre, une telle machine à laver 1 ayant un réservoir d'eau de lavage et/ou de rinçage 5 est moins onéreuse et plus simple à assembler tout en évitant d'arroser les pièces de vaisselle contenues à l'intérieur de la cuve de lavage 2 par l'eau introduite en excès dans le réservoir d'eau 5 et retournée depuis le réservoir d'eau 5 vers la cuve de lavage 2.

Préférentiellement, la deuxième branche du circuit hydraulique de distribution d'eau comprend une pluralité de conduites de circulation d'eau 13a, 13b, 13c reliant le puisard 4 de la cuve de lavage 2 au réservoir d'eau 5, et la conduite de trop plein 10 du réservoir d'eau 5 est reliée au puisard 4 de la cuve de lavage 2 par une autre conduite de circulation d'eau 13d de sorte à déverser un excès d'eau introduit dans le réservoir d'eau 5 vers le puisard 4 de la cuve de lavage 2, ladite autre conduite de circulation d'eau 13d reliant la conduite de trop plein 10 du réservoir d'eau 5 au puisard 4 de la cuve de lavage 2 est séparée de la pluralité de conduites de circulation d'eau 13a, 13b, 13c de la deuxième branche du circuit hydraulique de distribution d'eau.

Ainsi, lors de l'alimentation en eau du réservoir d'eau 5 depuis la cuve de lavage 2, un flux d'eau de lavage et/ou de rinçage entre en partie inférieure du réservoir d'eau 5 jusqu'au niveau d'une ouverture de passage d'eau 12 de la conduite de trop plein 10. Puis, l'eau introduite en excès dans le réservoir d'eau 5 est retournée depuis le réservoir d'eau 5 vers la cuve de lavage 2 au moyen de la conduite de circulation d'eau 13d reliant la conduite de trop plein 10 du réservoir d'eau 5 au puisard 4 de la cuve de lavage 2 et étant séparée de la pluralité de conduites de circulation d'eau 13a, 13b, 13c de la deuxième branche du circuit hydraulique de distribution d'eau.

Ici, le circuit hydraulique de distribution d'eau comprend une troisième branche. La troisième branche comprend une pompe de vidange 27 de sorte à évacuer de l'eau depuis la cuve de lavage 2 et/ou depuis le réservoir d'eau 5 vers un réseau d'eau usée.

Le circuit hydraulique de distribution d'eau de la machine à laver 1 exploite la première branche comprenant la pompe de circulation d'eau 3 pour alimenter en eau au moins un moyen d'aspersion d'eau 24 disposé dans la cuve de lavage 2, la deuxième branche comprenant la pompe de récupération d'eau 8 et la vanne 9 pour alimenter en eau le réservoir d'eau 5 lors de la récupération d'eau provenant d'au moins une phase de lavage et/ou de rinçage et pour vidanger en eau le réservoir d'eau 5 vers le puisard 4 de la cuve de lavage 2 lors de la réutilisation de l'eau stockée ou lors de la vidange de l'eau stockée vers un réseau d'eau usée externe, et la troisième branche comprenant la pompe de vidange 27 pour évacuer l'eau retenue dans le puisard 4 et/ou stockée dans le réservoir d'eau 5 vers un réseau d'eau usée externe.

Les première, deuxième et troisième branches du circuit hydraulique de distribution d'eau sont séparées les unes des autres.

Les première, deuxième et troisième branches du circuit hydraulique de distribution d'eau sont uniquement reliées par le puisard 4 de la cuve de lavage 2.

De cette manière, le dispositif de récupération d'eau provenant d'au moins une phase de lavage et/ou de rinçage comprenant le réservoir d'eau 5, la pompe de récupération d'eau 8 et la vanne 9 peut être désactivé ou activé au travers des moyens de commande de la machine à laver 1, et notamment d'un microcontrôleur, de sorte à désactiver ou activer la récupération d'eau de lavage et/ou de rinçage.

Le circuit hydraulique de distribution d'eau d'une machine à laver 1 permet d'adapter les cycles de fonctionnement de ladite machine à laver 1 en fonction de l'utilisation ou non du réservoir d'eau 5 avec ladite machine à laver 1.

En outre, le circuit hydraulique de distribution d'eau d'une machine à laver la vaisselle conforme à l'invention est adapté à être implanté sur une machine à laver la vaisselle dépourvue d'un réservoir d'eau sans modifier les première et troisième branches du circuit hydraulique de distribution d'eau de la machine à laver la vaisselle.

Le circuit hydraulique de distribution d'eau d'une telle machine à laver 1 comprend une première branche configurée pour alimenter des moyens d'aspersion d'eau 24 de la cuve de lavage 2 de sorte à nettoyer les pièces de vaisselle disposées dans des paniers à vaisselle de la cuve de lavage 2, et une deuxième branche indépendante configurée pour alimenter et vidanger en eau un réservoir d'eau 5 de sorte à récupérer l'eau de lavage et/ou de rinçage d'une phase d'un cycle de fonctionnement et à réutiliser cette eau récupérée au cours d'une phase suivante d'un cycle de fonctionnement ou lors d'un cycle de fonctionnement suivant.

Ainsi, le circuit hydraulique de distribution d'eau d'une telle machine à laver 1 peut être équipé ou non d'un moyen de répartition d'eau configuré pour alimenter en eau des moyens d'aspersion d'eau 24 de la cuve de lavage 2, tel que par exemple un répartiteur d'eau avec disque rotatif.

Dans le cas d'une machine à laver 1 ayant un circuit hydraulique de distribution d'eau comprenant un moyen de répartition d'eau, le moyen de répartition d'eau alimente en eau des moyens d'aspersion d'eau 24 soit alternativement soit simultanément.

Dans le cas d'une machine à laver 1 ayant un circuit hydraulique de distribution d'eau dépourvu d'un moyen de répartition d'eau, l'alimentation en eau des moyens d'aspersion d'eau 24 peut être réalisée par une conduite de circulation d'eau comprenant une entrée d'eau connectée en sortie de la pompe de circulation d'eau 3 et une pluralité de sorties d'eau connectées respectivement à un moyen d'aspersion d'eau 24.

Lors du remplissage en eau de lavage et/ou de rinçage du réservoir d'eau 5, le réservoir d'eau 5 est alimenté en eau au travers de la deuxième branche du circuit hydraulique de distribution d'eau comprenant une pluralité de conduites de circulation d'eau 13a, 13b, 13c reliant de manière fluidique le puisard 4, la pompe de récupération d'eau 8, la vanne 9 et le réservoir d'eau 5 de sorte que ladite pompe de récupération d'eau 8 alimente en eau de lavage et/ou de rinçage uniquement ledit réservoir d'eau 5.

Lors de la vidange d'eau de lavage et/ou de rinçage du réservoir d'eau 5, le réservoir d'eau 5 est vidé de l'eau au travers de la deuxième branche du circuit hydraulique de distribution d'eau en sens inverse, où la pompe de récupération d'eau 8 est à l'arrêt de sorte à laisser passer un flux d'eau dès l'ouverture de la vanne 9 montée sur la deuxième branche du circuit hydraulique de distribution d'eau.

Le réservoir d'eau 5 comprend un dispositif de mise à l'air de sorte à permettre le remplissage en eau et la vidange en eau du réservoir d'eau 5.

Le dispositif de mise à l'air du réservoir d'eau 5 comprend une première ouverture de passage d'air 22 disposée au-dessus d'une ouverture de passage d'eau 12 de la conduite de trop plein 10 ménagée à l'intérieur du réservoir d'eau 5.

Et le réservoir d'eau 5 comprend une deuxième ouverture de passage d'air 19 reliée à un dispositif de mise à l'air de la cuve de lavage 2, où les première et deuxième ouvertures de passage d'air 22, 19 sont en communication fluidique.

Ainsi, le réservoir d'eau 5 comprend une conduite de trop plein 10 reliant au moins une zone de stockage d'eau du réservoir d'eau 5 avec le puisard 4 de la cuve de lavage 2 et un dispositif de mise à l'air reliant ladite au moins une zone de stockage d'eau avec la cuve de lavage 2, où la conduite de trop plein 10 et le dispositif de mise à l'air du réservoir d'eau 5 sont séparés et indépendants.

De cette manière, la séparation de la conduite de trop plein 10 et du dispositif de mise à l'air du réservoir d'eau 5 de la machine à laver 1 permet de garantir le bon écoulement d'un flux d'eau introduit en excès depuis le réservoir d'eau 5 vers le puisard 4 de la cuve de lavage 2 ainsi que le bon écoulement d'air entre le réservoir d'eau 5 et un dispositif de mise à l'air de la cuve de lavage 2 lors du remplissage en eau du réservoir d'eau 5 depuis le puisard 4 de la cuve de lavage 2 et lors de la vidange en eau du réservoir d'eau 5 vers le puisard 4 de la cuve de lavage 2.

En outre, la conduite de trop plein 10 du réservoir d'eau 5 permet d'évacuer par gravité un surplus d'eau introduit dans le réservoir d'eau 5 vers le puisard 4 de la cuve de lavage 2 suite au remplissage en eau du réservoir d'eau 5 au-delà du niveau d'eau maximum admissible dans le réservoir d'eau 5.

Pratiquement, au moins une ouverture de passage d'air 19 du dispositif de mise à l'air du réservoir d'eau 5 est reliée à une ouverture de passage d'air 31 de la cuve de lavage 2.

Ici, les première et deuxième ouvertures de passage d'air 22, 19 sont reliées de manière fluidique par une conduite de circulation d'air 21 ménagée à l'intérieur du réservoir d'eau 5.

Ainsi, l'écoulement d'air entre les première et deuxième ouvertures de passage d'air 22, 19 du dispositif de mise à l'air du réservoir d'eau 5 est canalisé au moyen de la conduite de circulation d'air 21 ménagée à l'intérieur du réservoir d'eau 5.

Avantageusement, la conduite de circulation d'air 21 est disposée parallèlement à la conduite de trop plein 10.

Ainsi, le positionnement de la conduite de circulation d'air 21 par rapport à la conduite de trop plein 10 permet de minimiser l'espace occupé à l'intérieur du réservoir d'eau 5 de sorte à optimiser la taille de ladite au moins une zone de stockage d'eau du réservoir d'eau 5 et à maximiser la quantité d'eau stockée dans le réservoir d'eau 5.

Préférentiellement, la conduite de circulation d'air 21 et la conduite de trop plein 10 sont séparées par une cloison 32 commune ménagée à l'intérieur du réservoir d'eau 5.

Ainsi, la conduite de circulation d'air 21 est adjacente à la conduite de trop plein 10 de sorte à réduire le nombre de cloisons à l'intérieur du réservoir d'eau 5.

De cette manière, le coût d'obtention du réservoir d'eau 5 est minimisé et la réalisation de celui-ci est facilitée.

Dans un mode de réalisation, les première et deuxième ouvertures de passage d'air 22, 19 ménagées dans le réservoir d'eau 5 sont en communication fluidique avec au moins une troisième ouverture de passage d'air 33 ménagée dans le réservoir d'eau 5 et débouchant à l'extérieur du réservoir d'eau 5 et de la cuve de lavage 2.

Ainsi, le réservoir d'eau 5 comprend un dispositif de mise à l'air permettant de relier de manière fluidique la cuve de lavage 2, le réservoir d'eau 5 et l'extérieur de la machine à laver 1 de sorte à permettre un écoulement d'air au travers des première, deuxième et troisième ouvertures de passage d'air 22, 19, 33 au cours des différentes étapes d'un cycle de fonctionnement mis en oeuvre par la machine à laver 1.

Ici et de manière nullement limitative, le réservoir d'eau 5 comprend deux troisièmes ouvertures d'air 33. La disposition des deux troisièmes ouvertures d'air 33 dans une paroi du réservoir d'eau 5 permet d'augmenter la section de passage d'air depuis le réservoir d'eau 5 vers l'extérieur de celui-ci et de la cuve de lavage 2 tout en maintenant la rigidité du réservoir d'eau 5.

Avantageusement, ladite au moins une troisième ouverture d'air 33 est de forme circulaire de sorte à boucher facilement celle-ci lors de la vérification en production de l'étanchéité du réservoir d'eau 5.

Pratiquement, la deuxième et ladite au moins une troisième ouvertures de passage d'air 19, 33 sont disposées dans un compartiment interne 34 du réservoir d'eau 5, le compartiment interne 34 du réservoir d'eau 5 étant séparé de ladite au moins une zone de stockage d'eau du réservoir d'eau 5.

Ainsi, la disposition des deuxième et troisième ouvertures de passage d'air 19, 33 dans un compartiment interne 34 du réservoir d'eau 5 permet de séparer ces deuxième et troisième ouvertures de passage d'air 19, 33 de ladite au moins une zone de stockage d'eau du réservoir d'eau 5 de sorte à éviter un écoulement d'eau depuis ladite au moins une zone de stockage d'eau du réservoir d'eau 5 au travers des deuxième et troisième ouvertures de passage d'air 19, 33 reliées respectivement de manière fluidique à la cuve de lavage 2 et à l'extérieur de la cuve de lavage 2 de la machine à laver 1.

En outre, le compartiment interne 34 du réservoir d'eau 5 dans lequel sont disposées les deuxième et troisième ouvertures de passage d'air 19, 33 permet de retenir une quantité d'eau introduite en excès dans le réservoir d'eau 5 et ayant débordée par la première ouverture de passage d'air 22, en particulier au moyen d'au moins une paroi inférieure du compartiment interne 34 disposée en dessous des deuxième et troisième ouvertures de passage d'air 19, 33.

Par ailleurs, ladite au moins une paroi inférieure du compartiment interne 34 disposée en dessous des deuxième et troisième ouvertures de passage d'air 19, 33 permet de retenir des condensas résultant de la circulation d'air chargée en humidité entre la cuve de lavage 2 et le dispositif de mise à l'air du réservoir d'eau 5, dont le compartiment interne 34 du réservoir d'eau 5 fait partie intégrante.

Avantageusement, le réservoir d'eau 5 comprend une paroi de séparation 35 disposée entre la deuxième et ladite au moins une troisième ouvertures de passage d'air 19, 33 de sorte à canaliser un écoulement d'eau introduit au travers de la première ouverture de passage d'air 22 vers la deuxième ouverture de passage d'air 19 suite à un remplissage en eau du réservoir d'eau 5 au-delà de l'ouverture de passage d'eau 12 de la conduite de trop plein 10.

Ainsi, dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22, cette quantité d'eau peut être retournée dans la cuve de lavage 2 au moyen de la deuxième ouverture de passage d'air 19 ménagée dans le réservoir d'eau 5 et en communication fluidique avec la cuve de lavage 2.

De cette manière, la quantité d'eau introduite au travers de la première ouverture de passage d'air 22 est récupérée dans la cuve de lavage 2 de sorte à éviter un débordement d'eau en dehors de la cuve de lavage 2, et en particulier dans une zone comprenant des organes de la machine à laver 1 alimentés en énergie électrique.

Ici, le réservoir d'eau 5 comprend une paroi de retenue d'eau 36 disposée au moins en partie en dessous de la deuxième ouverture de passage d'air 19 de sorte à canaliser un écoulement d'eau introduit au travers de la première ouverture de passage d'air 22 vers la deuxième ouverture de passage d'air 19, puis vers la cuve de lavage 2 suite à un remplissage en eau du réservoir d'eau 5 au-delà de l'ouverture de passage d'eau 12 de la conduite de trop plein 10.

Ainsi, dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22, cette quantité d'eau est canalisée par une paroi de retenue d'eau 36 disposée au moins en partie en dessous de la deuxième ouverture de passage d'air 19 de sorte à retourner cette quantité d'eau dans la cuve de lavage 2 au moyen de la deuxième ouverture de passage d'air 19 ménagée dans le réservoir d'eau 5 et en communication fluidique avec la cuve de lavage 2.

Ici, une ouverture de sortie d'air 23 de la conduite de circulation d'air 21 débouche dans le compartiment interne 34 du réservoir d'eau 5, et en particulier entre la paroi de séparation 35 séparant les deuxième et troisième ouvertures de passage d'air 19, 33 et la cloison 32 séparant la conduite de trop plein 10 et la conduite de circulation d'air 21 de sorte à éviter un écoulement d'eau vers ladite au moins une troisième ouverture de passage d'air 33 reliée de manière fluidique à l'extérieur de la cuve de lavage 2 dans le cas où un surplus d'eau est introduit dans le réservoir d'eau 5 au-delà de l'ouverture de passage d'eau 12 de la conduite de trop plein 10 et qu'une quantité d'eau est introduite au travers de la première ouverture de passage d'air 22.

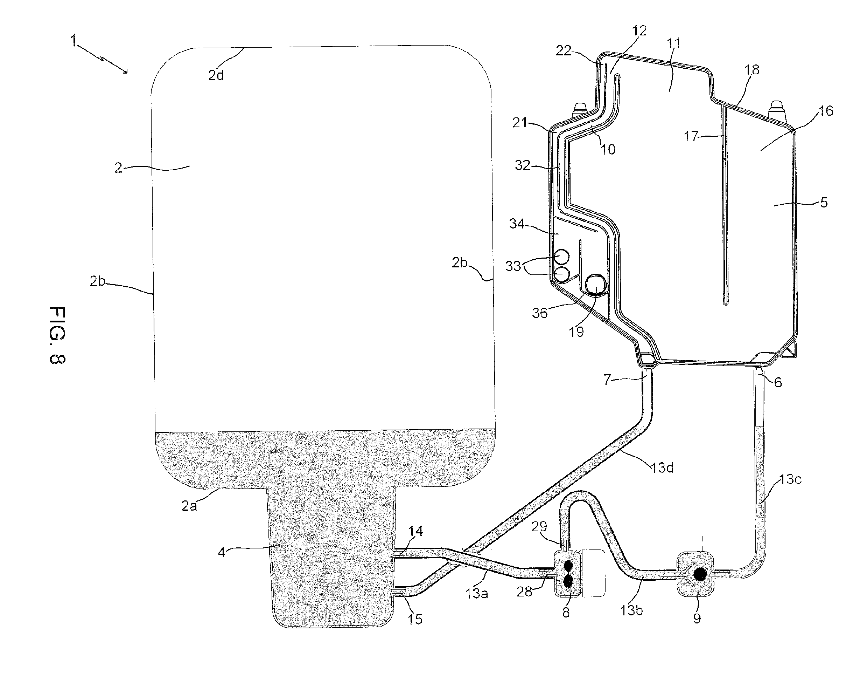

Dans un mode de réalisation tel qu'illustré à la figure 8, le puisard 4 de la cuve de lavage 2 comprend une ouverture d'entrée d'eau 15 reliée de manière fluidique avec la conduite de trop plein 10 ménagée à l'intérieur du réservoir d'eau 5.

Avantageusement, l'eau provenant d'un bain de lavage et/ou de rinçage alimentant le réservoir de stockage d'eau 5 pour une réutilisation pendant un cycle de fonctionnement suivant mis en oeuvre par la machine à laver 1 est de l'eau chauffée, et préférentiellement l'eau du dernier du bain de rinçage, ou encore appelée l'eau du bain de rinçage chaud.

Avantageusement, le circuit hydraulique de distribution d'eau comprend un dispositif de filtration d'eau 26 situé en amont du réservoir d'eau 5 de sorte à alimenter en eau de lavage et/ou de rinçage filtrée le réservoir d'eau 5.

Ici, l'eau alimentant le réservoir d'eau 5 est filtrée par le dispositif de filtration 26 puisque le dispositif de filtration 26 est situé en amont de la pompe de récupération d'eau 8. La pompe de récupération d'eau 8 prélève de l'eau de la cuve de lavage 2, notamment du puisard 4, suite au passage de ladite eau dans le dispositif de filtration 26 pour alimenter en eau le réservoir d'eau 5 de sorte à éviter l'encrassement dudit réservoir d'eau 5 et de la deuxième branche du circuit hydraulique de distribution d'eau.

Dans un mode de réalisation, le dispositif de filtration 26 est logé au moins partiellement à l'intérieur du puisard 4.

Ainsi, le dispositif de filtration 26 logé dans le puisard 4 permet également de filtrer l'eau d'un bain de lavage et/ou de rinçage aspirée par la pompe de récupération d'eau 8 puis mise en circulation jusqu'au réservoir d'eau 5.

Le dispositif de filtration 26 peut comprendre un piège à déchets, un filtre intermédiaire et un micro filtre.

Le circuit hydraulique de distribution d'eau de la machine à laver 1 comprend la première conduite de circulation d'eau 13a reliant une première ouverture de passage d'eau 14 du puisard 4 de la cuve de lavage 2 à une ouverture d'entrée d'eau 28 de la pompe de récupération d'eau 8.

Préférentiellement, une ouverture de sortie d'eau 29 de la pompe de récupération d'eau 8 est reliée à une vanne 9 par une deuxième conduite de circulation d'eau 13b.

On va à présent décrire, en référence aux figures 5 à 7, un réservoir de stockage d'eau de lavage et/ou de rinçage d'une machine à laver, et en particulier d'une machine à laver la vaisselle, conforme à l'invention.

Le réservoir d'eau 5 comprend au moins deux compartiments internes 11, 16.

Une paroi de séparation 17 est ménagée entre un premier compartiment interne 11 et un deuxième compartiment interne 16.

Ici, les premier et deuxième compartiments internes 11, 16 du réservoir d'eau 5 sont des zones de stockage d'eau ménagées à l'intérieur du réservoir d'eau 5.

Dans un mode de réalisation, le réservoir d'eau 5 comprend une première paroi en forme de coque 5a et une deuxième paroi en forme de coque 5b.

Lesdits au moins deux compartiments internes 11, 16 du réservoir d'eau 5 sont formées par l'assemblage des deux parois en forme de coque 5a, 5b du réservoir d'eau 5.

Les première et deuxième canalisations internes 10, 21, ainsi que la paroi de séparation 17, sont ménagées à l'intérieur du réservoir d'eau 5 et formées par l'assemblage des deux parois en forme de coque 5a, 5b du réservoir d'eau 5.

La fixation des deux parois en forme de coque 5a, 5b du réservoir d'eau 5 peut être réalisée par soudure, en particulier par un procédé de soudure en miroir au moyen de lames chauffantes, ou par un procédé de soudure par ultrasons, ou par un procédé de soudure par vibration.

Bien entendu, le mode de fixation des deux parois en forme de coque 5a, 5b du réservoir d'eau 5 n'est nullement limitatif et peut être différent, en particulier par vissage.

Les première et deuxième parois en forme de coque 5a, 5b comprennent des cloisons formant respectivement une première et une deuxième parties des première et deuxième canalisations internes 10, 21 et de la paroi de séparation 17.

Les cloisons des première et deuxième parties des première et deuxième canalisations internes 10, 21 et de la paroi de séparation 17 ménagées dans les première et deuxième parois en forme de coque 5a, 5b coopèrent ensemble de sorte à former les première et deuxième canalisations internes 10, 21 et la paroi de séparation 17.

Ici, la paroi périphérique 18 du réservoir d'eau 5 comprend une double cloison de sorte à garantir la robustesse et l'étanchéité du réservoir d'eau 5 formé par l'assemblage de deux parois en forme de coque 5a, 5b.

Préférentiellement, le réservoir d'eau 5 est en matière plastique.

A titre d'exemple nullement limitatif, le réservoir d'eau 5 est réalisé en polypropylène, ou en acrylonitrile butadiène styrène communément appelé ABS.

Ici, la matière plastique employée est destinée à permettre la soudure des première et deuxième parois en forme de coque 5a, 5b du réservoir d'eau 5.

La matière plastique du réservoir d'eau 5 est définie de sorte à minimiser le coût d'obtention de celui-ci, à garantir la stabilité dimensionnelle du réservoir d'eau 5, et la compatibilité avec l'eau de lavage et/ou de rinçage introduite dans le réservoir d'eau 5.

La matière plastique peut également être chargée, en particulier avec un agent antibactérien.

Dans un mode de réalisation, le réservoir d'eau 5 est isolé thermiquement et ou acoustiquement par au moins une couche de matériau (non représentée).

L'isolant thermique et/ou acoustique recouvrant le réservoir d'eau 5 peut être constitué d'une ou plusieurs couches réalisées à partir d'un seul matériau ou de plusieurs matériaux, tel que par exemple du bitume et/ou du feutre.

Bien entendu, le nombre de couches d'isolant thermique et/ou acoustique et le type d'isolant thermique et/ou acoustique ne sont nullement limitatifs et peuvent être différents.

L'isolation thermique du réservoir d'eau 5 permet de garantir une meilleure conservation de l'énergie calorifique de l'eau d'au moins une phase de lavage et/ou de rinçage pour une réutilisation pendant un cycle de fonctionnement suivant mis en oeuvre par la machine à laver.

Dans un mode de réalisation, l'isolant thermique et/ou acoustique peut être disposé entre le réservoir d'eau 5 et la cuve de lavage 2.

Dans un mode de réalisation, le réservoir d'eau 5 peut être réalisé dans un matériau anti-bactériologique ou anti-fongicide de sorte à éviter la formation d'un bio film sur les parois internes de celui-ci.

Le matériau utilisé pour réaliser le réservoir d'eau 5 peut comprendre par exemple des ions argent de sorte à éviter la formation d'un bio film sur les parois internes de celui-ci.

Préférentiellement, la ou les cloisons constituant le contour périphérique dudit au moins un compartiment interne 11, 16 du réservoir d'eau 5 comprennent des parties de cloison s'étendant suivant la largeur du réservoir d'eau, où ces parties de cloison s'étendant suivant la largeur du réservoir d'eau 5 sont inclinées de bas en haut, ou inversement, suivant la hauteur du réservoir d'eau 5.

Ainsi, suite au stockage de l'eau de lavage et/ou de rinçage dans le réservoir d'eau 5 où ladite eau est stagnante, des salissures se déposent sur la ou les cloisons constituant le contour périphérique dudit au moins un compartiment interne 11, 16 du réservoir d'eau 5. Et lors de la vidange en eau du réservoir d'eau 5 au travers de la première ouverture de passage d'eau 6, les salissures déposées à l'intérieur dudit au moins un compartiment interne 11, 16 du réservoir d'eau 5 sont entraînées par l'écoulement d'eau le long des parties de cloison inclinées de sorte à éviter qu'une partie de ces salissures ne soient retenues dans le réservoir d'eau 5.

De cette manière, le réservoir d'eau 5 est maintenu propre en évacuant les salissures déposées à l'intérieur de celui-ci de sorte à éviter une contamination de l'eau de lavage et/ou de rinçage stockée dans le réservoir d'eau 5 au cours d'une phase suivante d'un cycle de fonctionnement ou lors d'un cycle de fonctionnement suivant de la machine à laver 1.

Ici, la ou les cloisons constituant le contour périphérique dudit au moins un compartiment interne 11, 16 du réservoir d'eau 5 comprennent la paroi périphérique 18 du réservoir d'eau 5 et la paroi 25 ménagée entre le premier compartiment interne 11 et la première canalisation interne 10.

La machine à laver 1 comprend une unité de commande (non représentée), ladite unité de commande comportant au moins une carte électronique. Ladite au moins une carte électronique comprend au moins un microcontrôleur apte à mettre en oeuvre des cycles de fonctionnement prédéterminés de la machine à laver 1. Ainsi, l'unité de commande contrôle notamment la pompe de circulation d'eau 3, la pompe de récupération d'eau 8, la pompe de vidange 27, la vanne 9 et la vanne d'alimentation en eau du réseau de sorte à récupérer de l'eau de lavage et/ou de rinçage provenant de la cuve de lavage 2 dans le réservoir d'eau 5 au cours d'un cycle de fonctionnement, et à réutiliser la quantité d'eau stockée dans le réservoir d'eau 5 au cours d'une phase suivante d'un cycle de fonctionnement ou lors d'un cycle de fonctionnement suivant, comme décrit précédemment.

Grâce à la présente invention, un flux d'eau de lavage et/ou de rinçage entrant en partie inférieure du réservoir d'eau lors de l'alimentation en eau du réservoir d'eau depuis la cuve de lavage permet de limiter les bruits d'écoulement d'eau lors du remplissage en eau du réservoir d'eau.

En outre, le circuit hydraulique de distribution d'eau de la machine à laver est simplifié tout en séparant les première et deuxième branches de ce circuit hydraulique de distribution d'eau.

Bien entendu, de nombreuses modifications peuvent être apportées aux exemples de réalisation décrits précédemment sans sortir du cadre de l'invention.

Ainsi, la machine à laver peut être une machine à laver la vaisselle, une machine à laver le linge, ou une machine à laver et à sécher le linge.

## Revendications

1. Machine à laver (1) comprenant:
- une cuve de lavage (2) ;
- un réservoir d'eau de lavage et/ou de rinçage (5) ;
- un circuit hydraulique de distribution d'eau, où ledit circuit hydraulique de distribution d'eau comprend :
o une première branche, ladite première branche comprenant une pompe de circulation d'eau (3) de sorte à alimenter en eau au moins un moyen d'aspersion d'eau (24) disposé dans ladite cuve de lavage (2) ;
o une deuxième branche, ladite deuxième branche comprenant:
▪ une pompe de récupération d'eau (8) de sorte à alimenter en eau au moins une zone de stockage d'eau dudit réservoir d'eau (5) lors de la récupération d'eau provenant d'au moins une phase de lavage et/ou de rinçage,
▪ une vanne (9) de sorte à empêcher un écoulement d'eau depuis ledit réservoir d'eau (5) vers ladite cuve de lavage (2) au travers d'une ouverture de passage d'eau (6) ménagée dans ledit réservoir d'eau (5) suite à l'alimentation en eau dudit réservoir d'eau (5), et de sorte à permettre un écoulement d'eau depuis ledit réservoir d'eau (5) vers ladite cuve de lavage (2) au travers de ladite ouverture de passage d'eau (6) ménagée dans ledit réservoir d'eau (5) lors de la vidange dudit réservoir d'eau (5) vers ladite cuve de lavage (2) ;
ladite vanne (9) de ladite deuxième branche dudit circuit hydraulique de distribution d'eau étant activée en position ouverte lors de la récupération d'eau provenant d'au moins une phase de lavage et/ou de rinçage de sorte à permettre un écoulement d'eau depuis ladite cuve de lavage (2) vers ledit réservoir d'eau (5), et ladite deuxième branche dudit circuit hydraulique de distribution d'eau reliant ladite cuve de lavage (2) à une paroi inférieure dudit réservoir d'eau (5), **caractérisée en ce que** ledit réservoir d'eau (5) comprend une conduite de trop plein (10) ménagée à l'intérieur dudit réservoir d'eau (5) et mise en communication fluidique d'une part avec ladite au moins une zone de stockage d'eau dudit réservoir d'eau (5) et d'autre part avec un puisard (4) de ladite cuve de lavage (2).

2. Machine à laver (1) selon la revendication 1, **caractérisée en ce que** ladite deuxième branche dudit circuit hydraulique de distribution d'eau comprend une pluralité de conduites de circulation d'eau (13a, 13b, 13c) reliant ledit puisard (4) de ladite cuve de lavage (2) audit réservoir d'eau (5), et **en ce que** ladite conduite de trop plein (10) dudit réservoir d'eau (5) est reliée audit puisard (4) de ladite cuve de lavage (2) par une autre conduite de circulation d'eau (13d) de sorte à déverser un excès d'eau introduit dans ledit réservoir d'eau (5) vers ledit puisard (4) de ladite cuve de lavage (2), ladite autre conduite de circulation d'eau (13d) reliant ladite conduite de trop plein (10) dudit réservoir d'eau (5) audit puisard (4) de ladite cuve de lavage (2) est séparée de la pluralité de conduites de circulation d'eau (13a, 13b, 13c) de ladite deuxième branche dudit circuit hydraulique de distribution d'eau.

3. Machine à laver (1) selon la revendication 1 ou 2, **caractérisée en ce que** ledit circuit hydraulique de distribution d'eau comprend une troisième branche, ladite troisième branche comprenant une pompe de vidange (27) de sorte à évacuer de l'eau depuis ladite cuve de lavage (2) et/ou depuis ledit réservoir d'eau (5) vers un réseau d'eau usée.

4. Machine à laver (1) selon la revendication 3, **caractérisée en ce que** les première, deuxième et troisième branches dudit circuit hydraulique de distribution d'eau sont séparées les unes des autres.

5. Machine à laver (1) selon la revendication 3 ou 4, **caractérisée en ce que** les première, deuxième et troisième branches dudit circuit hydraulique de distribution d'eau sont uniquement reliées les unes aux autres par un puisard (4) de ladite cuve de lavage (2).

6. Machine à laver (1) selon l'une quelconque des revendications 1 à 5, **caractérisée en ce que** ledit réservoir d'eau (5) comprend un dispositif de mise à l'air de sorte à permettre le remplissage en eau et la vidange en eau dudit réservoir d'eau (5), et **en ce qu'**au moins une ouverture de passage d'air (19, 22) dudit dispositif de mise à l'air dudit réservoir d'eau (5) est reliée à une ouverture de passage d'air (31) de ladite cuve de lavage (2).

## Patentansprüche

1. Waschmaschine (1), umfassend:
- einen Waschbehälter (2);
- einen Wasch- und/oder Spülwassertank (5);
- einen hydraulischen Wasserverteilungskreis, wobei der besagte hydraulische Wasserverteilungskreis Folgendes umfasst:
o einen ersten Zweig, wobei der besagte erste Zweig eine Wasserumlaufpumpe (3) umfasst, um mindestens ein Wasserbesprengungsmittel (24), das im besagten Waschbehälter (2) angeordnet ist, mit Wasser zu versorgen;
o einen zweiten Zweig, wobei der besagte zweite Zweig Folgendes umfasst:
▪ eine Pumpe zur Wasserrückgewinnung (8), um mindestens einen Wasserspeicherungsbereich des besagten Wassertanks (5) bei der Wasserrückgewinnung aus mindestens einer Wasch- und/oder Spülphase mit Wasser zu versorgen;
▪ ein Ventil (9), um nach der Versorgung des besagten Wassertanks (5) mit Wasser ein Abfließen des Wassers aus dem besagten Wassertank (5) in den besagten Waschbehälter (2) durch eine Wasserdurchlauföffnung (6), die im besagten Wassertank (5) ausgeführt ist, zu verhindern, und um ein Abfließen des Wassers aus dem besagten Wassertank (5) in den besagten Waschbehälter (2) durch die besagte Wasserdurchlauföffnung (6), die im besagten Wassertank (5) ausgeführt ist, beim Ablassen des besagten Wassertanks (5) in den besagten Waschbehälter (2) zu ermöglichen;
wobei das besagte Ventil (9) des besagten zweiten Zweiges des besagten hydraulischen Wasserverteilungskreises bei der Wasserrückgewinnung aus mindestens einer Wasch- und/oder Spülphase in geöffnete Position geschaltet wird, um ein Abfließen des Wassers aus dem besagten Waschbehälter (2) in den besagten Wassertank (5) zu ermöglichen, und wobei der besagte zweite Zweig des besagten hydraulischen Wasserverteilungskreises den besagten Waschbehälter (2) mit einer unteren Wand des besagten Wassertanks (5) verbindet, **dadurch gekennzeichnet, dass** der besagte Wassertank (5) eine Überlaufleitung (10) umfasst, die in dem besagten Wassertank (5) ausgeführt ist und einerseits an mindestens einen Wasserspeicherungsbereich des besagten Wassertanks (5) und andererseits an einen Pumpensumpf (4) des besagten Waschbehälters (2) fluidisch angeschlossen ist.

2. Waschmaschine (1) nach Anspruch 1, **dadurch gekennzeichnet, dass** der besagte zweite Zweig des besagten hydraulischen Wasserverteilungskreises eine Vielzahl von Wasserumlaufleitungen (13a, 13b, 13c) umfasst, die den besagten Pumpensumpf (4) des besagten Waschbehälters (2) mit dem besagten Wassertank (5) verbinden, und dadurch, dass die besagte Überlaufleitung (10) des besagten Wassertanks (5) mit dem besagten Pumpensumpf (4) des besagten Waschbehälters (2) über eine andere Wasserumlaufleitung (13d) verbunden ist, um überschüssiges Wasser, das in den besagten Wassertank (5) eingeleitet wird, in den besagten Pumpensumpf (4) des besagten Waschbehälters (2) abzulassen, wobei die besagte andere Wasserumlaufleitung (13d), die die besagte Überlaufleitung (10) des besagten Wassertanks (5) mit dem besagten Pumpensumpf (4) des besagten Waschbehälters (2) verbindet, von der Vielzahl von Wasserumlaufleitungen (13a, 13b, 13c) des besagten zweiten Zweiges des besagten hydraulischen Wasserverteilungskreises getrennt ist.

3. Waschmaschine (1) nach Anspruch 1 oder 2, **dadurch gekennzeichnet, dass** der besagte hydraulische Wasserverteilungskreis einen dritten Zweig umfasst, wobei der besagte dritte Zweig eine Ableerpumpe (27) umfasst, um Wasser aus dem besagten Waschbehälter (2) und/oder aus dem besagten Wassertank (5) in ein Abwassernetz abzuleiten.

4. Waschmaschine (1) nach Anspruch 3, **dadurch gekennzeichnet, dass** der erste, zweite und dritte Zweig des besagten hydraulischen Wasserverteilungskreises voneinander getrennt sind.

5. Waschmaschine (1) nach Anspruch 3 oder 4, **dadurch gekennzeichnet, dass** der erste, zweite und dritte Zweig des besagten hydraulischen Wasserverteilungskreises nur durch einen Pumpensumpf (4) des besagten Waschbehälters (2) miteinander verbunden sind.

6. Waschmaschine (1) nach einem beliebigen der Ansprüche 1 bis 5, **dadurch gekennzeichnet, dass** der besagte Wassertank (5) eine Entlüftungsvorrichtung umfasst, um das Befüllen mit Wasser und das Ablassen des Wassers aus dem besagten Wassertank (5) zu ermöglichen, und dadurch, dass mindestens eine Luftdurchlassöffnung (19, 22) der besagten Entlüftungsvorrichtung des besagten Wassertanks (5) mit einer Luftdurchlassöffnung (31) des besagten Waschbehälters (2) verbunden ist.

## Claims

1. A washing machine (1) comprising:
- a wash tub (2);
- a washing and/or rinsing water tank (5);
- a hydraulic water distribution circuit, wherein said hydraulic water distribution circuit comprises:
o a first branch, said first branch comprising a water circulation pump (3) so as to supply with water at least one water spraying means (24) disposed in said wash tub (2);
o a second branch, said second branch comprising:
▪ a water recovery pump (8) so as to supply with water at least one water storage area of said water tank (5) during the recovery of water from at least one washing and/or rinsing phase,
▪ a valve (9) so as to prevent a flow of water from said water tank (5) to said wash tub (2) through a water passageway (6) built into said water tank (5) after the supplying of said water tank (5) with water, and so as to allow a flow of water from said water tank (5) to said wash tub (2) through said water passageway (6) built into said water tank (5) during the draining of said water tank (5) to said wash tub (2);
said valve (9) of said second branch of said hydraulic water distribution circuit being activated into an open position when water is recovered from at least one washing and/or rinsing phase so as to allow a flow of water from said wash tub (2) to said water tank (5), and said second branch of said hydraulic water distribution circuit connecting said wash tub (2) to a lower wall of said water tank (5), **characterized in that** said water tank (5) comprises an overflow pipe (10) built inside said water tank (5) and placed in fluid communication both with said at least one water storage area of said water tank (5) and with a sump (4) of said wash tub (2).

2. A washing machine (1) according to claim 1, **characterized in that** said second branch of said hydraulic water distribution circuit comprises a plurality of water circulation pipes (13a, 13b, 13c) connecting said sump (4) of said wash tub (2) to said water tank (5), and **in that** said overflow pipe (10) of said water tank (5) is connected to said sump (4) of said wash tub (2) by another water circulation pipe (13d) so as to spill excess water introduced into said water tank (5) out to said sump (4) of said wash tub (2), said other water circulation pipe (13d) connecting said overflow pipe (10) of said water tank (5) to said sump (4) of said wash tub (2) is separated from the plurality of water circulation pipes (13a, 13b, 13c) of said second branch of said hydraulic water distribution circuit.

3. A washing machine (1) according to claim 1 or 2, **characterized in that** said hydraulic water distribution circuit comprises a third branch, said third branch comprising a draining pump (27) so as to discharge water from said wash tub (2) and/or from said water tank (5) to a wastewater network.

4. A washing machine (1) according to claim 3, **characterized in that** the first, second, and third branches of said hydraulic water distribution circuit are separated from one another.

5. A washing machine (1) according to claim 3 or 4, **characterized in that** the first, second, and third branches of said hydraulic water distribution circuit are only connected to one another by a sump (4) of said wash tub (2).

6. A washing machine (1) according to any one of the claims 1 to 5, **characterized in that** said water tank (5) comprises a venting device so as to allow the filling with water and draining of water of said water tank (5), and **in that** at least one air passageway (19, 22) of said venting device of said water tank (5) is connected to an air passageway (31) of said wash tub (2).
